# EUROPEAN PATENT APPLICATION

(11) **EP 0 707 173 A1**
(43) Date of publication of application: **17.04.1996**
(21) Application number: 95307303.8
(22) Date of filing: 16.10.1995
(51) Int. Cl.: F16L 55/05

(54) **Surge suppressor**

(30) Priority: 15.10.1994 GB 9420830
(71) Applicant: BINKS BULLOWS LIMITED, Brownhills, Staffordshire WS8 7HW (GB)
(72) Inventor: Lupa, Zbigniew, Sutton Coldfield, Warwickshire, B74 3NJ (GB)
(74) Representative: Carpenter, David

(57) **Abstract**

A surge suppressor comprising a housing (11, 15, 16, 17) divided internally by a flexible diaphragm (22) to define first and second sub-chambers (24, 25), the volume of the first sub-chamber (24), with the diaphragm (33) in a central rest position, being significantly smaller than the volume of the second sub-chamber (25), coupling means (44) for connecting the first sub-chamber, in use, with an hydraulic line, first valve means (38) operable, in use, to couple the second sub-chamber (25) to a source of gas under pressure, second valve means (39) operable, in use, to vent the second sub-chamber (25) to atmosphere, and means (41) response to the position of said diaphragm (22) for operating said first and second valve means (38, 39) in relation thereto.

## Description

This invention relates to an hydraulic pressure surge suppressor primarily intended for use in smoothing the pressure of liquid paint in a supply line from a delivery pump to a demand point such as a paint spray gun.

Surge suppressors in common use are often referred to as "surge bottles" and comprise a pair of part spherical housing components clamped together on opposite sides of a flexible diaphragm so as to define a chamber divided internally into first and second sub-chambers by the diaphragm. One of the sub-chambers communicates with the paint supply line and is filled with paint, while the other chamber contains air under pressure, the air pressure in said other sub-chamber being such that the diaphragm is centrally disposed between the two housing parts when paint in the supply line is at a predetermined intended operating pressure. It will be recognised that in operation should the pressure in the supply line fall then the air pressure acting on the diaphragm will exceed the paint supply line pressure and will thus deflect the diaphragm to reduce the volume of the first sub-chamber expeiiing paint therefrom into the supply line and thus augmenting the pressure in the supply line. Similarly, should the pressure in the supply line exceed the normal operating pressure then the diaphragm will be deflected in the opposite direction as paint flows into the first sub-chamber thus compressing further the air in the second sub-chamber.

Known surge suppressors of the kind having a pair of part spherical housing component defining a housing divided internally by a diaphragm suffer from two notable disadvantages. Firstly the air under pressure in the second sub-chamber inevitably leaks to a lesser or greater extent so that routinely the second sub-chamber needs to be recharged with compressed air. Such recharging is a manual exercise and often is not performed until the surge suppressor has manifestly failed to operate. Secondly, for convenience the suppressor is arranged such that the first and second sub-chambers are of equal volume when the diaphragm is centrally disposed. This permits easy setting up of the pressure conditions since with no paint in the first sub-chamber the second sub-chamber is pressurized to half the intended operating paint supply line pressure. Thereafter when paint fills the supply line, at the intended operating pressure, then paint flowing into the first sub-chamber displaces the diaphragm until a central position is reached, at which point of course the air pressure in the second sub-chamber is equal to the paint supply line pressure. Inevitably however equalisation of the volumes of the first and second sub-chambers produces a relatively inefficient suppressor. The inventor has realised that a suppressor having an air sub-chamber volume greatly in excess of the paint sub-chamber volume will provide a more efficient surge suppressor as the change in pressure in air, for a given change in volume of the paint sub-chamber will be less. Thus for example where the pressure fluctuations being suppressed are those occurring during reversal of the pump piston movement in a pumped paint supply, and the pump is a 270 litre/minute pump, a typical change in volume of the paint in the surge chamber during the pump reversal is in the region of 0.4 litres.

The total volume of each chamber (air and paint) in a conventional surge suppressor is approximately 1.95 litres.

Now consider what happens when the air expands when the air chamber gives up its stored energy during pump reversal. Following the law P₁ V₁ = P₂ V₂ (at constant temperature), for a pump operating at about 10. 5 bar we can calculate that the paint pressure drops by approximately 2.35 bar.

If we now look at a surge suppressor where the air chamber volume is about 11.5 litres which is appreciably higher than in the conventional unit the calculated pressure drop is only 0.37 bar.

However, such an arrangement is inherently more difficult to set-up than the equal volume sub-chambers suppressor particularly since the position of the diaphragm is not visible.

It is an object of the present invention to provide a surge suppressor wherein the aforementioned disadvantages are minimised.

In accordance with the present invention there is provided a surge suppressor comprising a housing divided internally by a flexible diaphragm to define first and second sub-chambers, the volume of the first sub-chamber, with the diaphragm in a central rest position, being significantly smaller than the volume of the second sub-chamber, coupling means for connecting the first sub-chamber, in use, with an hydraulic line, first valve means operable, in use, to couple the second sub-chamber to a source of gas under pressure, second valve means operable, in use, to vent the second sub-chamber to atmosphere, and means response to the position of said diaphragm for operating said first and second valve means in relation thereto.

Preferably said means responsive to the position of said diaphragm comprises a mechanical diaphragm follower which moves with the diaphragm, and which, when the volume of the first sub-chamber exceeds a predetermined value, operates said first valve means to permit introduction of air under pressure into the second sub-chamber, and which, when the volume of said first sub-chamber falls below a second predetermined value, operates said second valve means to vent said second sub-chamber to atmosphere.

In the accompanying drawings:-
Figure 1 is a cross-sectional representation of a surge suppressor in accordance with one example of the present invention, and
Figure 2 is a view similar to Figure 1 of a modification.

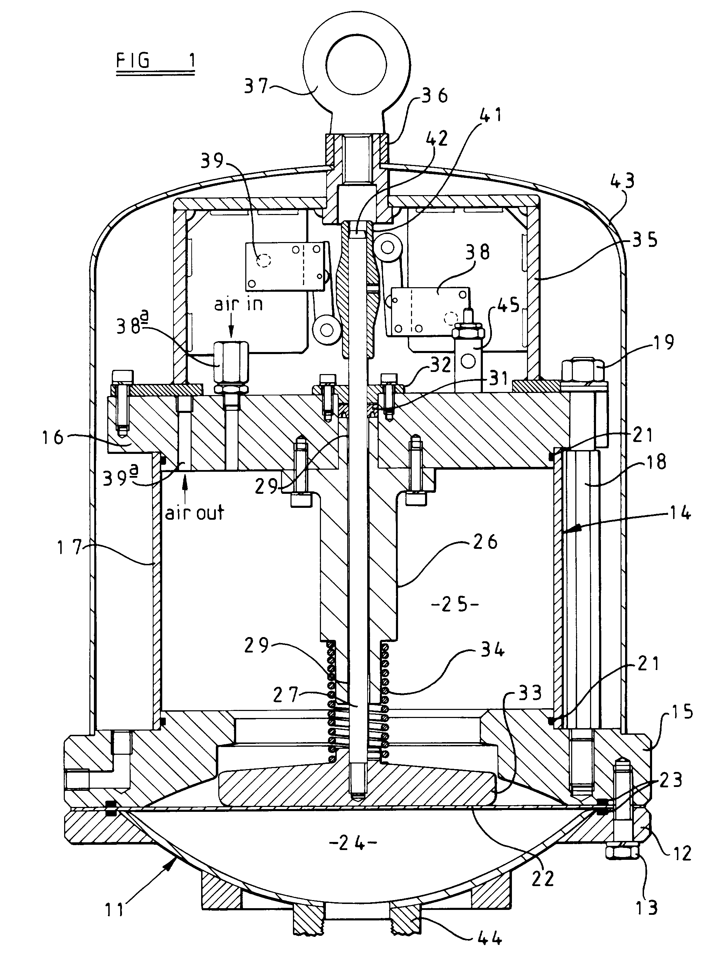

Referring first to Figure 1 of the drawings the surge suppressor comprises a first, part-spherical, housing component 11 having a peripheral flange 12 secured by bolts 13 to a base plate 15 of a second housing component 14. The base plate 15 is annular, and the second housing component 14 further includes a top plate 16 parallel to, and spaced from the base plate 15, and a cylindrical sleeve 17 sealingly engaging the plates 15 and 16 at its opposite axial ends respectively. A plurality of support pillars 18 are equiangularly spaced around the plates 15, 16 and interconnect the plates, axially loading them towards one another to trap the sleeve 17 therebetween, the pillars 18 being in screw-threaded connection with the plate 15 and having screw-threaded spigots extending through the plate 16 and receiving nuts 19 for loading the plate 16 axially towards the plate 15. The plates 15, 16 include regions of reduced cross-section which are slidably received within the sleeve 17, sealing rings 21 being interposed between the sleeve 17 and the reduced diameter regions of the plates.

A flexible, circular diaphragm 22 is trapped, at its periphery, between the flange 12 and the base plate 15 and sealing rings 23 set in grooves in the flange 12 and the base plate 15 engage the opposite faces of the diaphragm, around its periphery, to seal the diaphragm to the flange 12 and the plate 15 respectively.

It will be recognised that the housing components 11 and 14 define a chamber divided internally into first and second sub-chambers 24, 25, by the diaphragm 22. The volume of the first sub-chamber 24 is significantly less than the volume of the second sub-chamber 25, the diaphragm 22 being exposed to the sub-chamber 25 through the central aperture of the plate 15. In one application of the embodiment shown in Figure 1, with the diaphragm 22 in a central position, the volume of the sub-chamber 24 was 1.95 litres while the volume of the sub-chamber 25 was 11.5 litres.

Extending within the sub-chamber 25 coaxial with the cylindrical sleeve 17 is a push-rod support member 26 having a through bore slidably receiving a push-rod 27. The support 26 is bolted to the underside of the plate 16 and terminates adjacent the plate 15. The through bore of the support 26 is of larger diameter than the push-rod 27 and adjacent its ends the bore receives respective bearing bushes 29 supporting the push-rod 27 for axial sliding movement relative to the support 26 and the housing 11, 14.

The push-rod 27 extends through the plate 16, and a sliding seal 31 and its associated packing 32, carried by the plate 16, engage the push-rod 27 so as to seal the sub-chamber 25 while permitting sliding movement of the push-rod 27 through the plate 16.

At its end adjacent the diaphragm 22 the push-rod 27 carries a piston 33 the lower surface of which rests upon the upper surface of the diaphragm 22. A light, helically wound compression spring 34 or equivalent resilient biasing device acts between the support 26 and the piston 33 to urge the piston 33 lightly into contact with the diaphragm 22 so that the piston 33 and push-rod 27 will follow flexure of the diaphragm 22 relative to the housing 11, 14.

Anchored to the outer face of the plate 16 is a metal framework 35 which defines a lifting bridge, the framework having an attachment point 36 for a lifting ring 37 whereby the suppressor can be supported when being installed and/or serviced. The lifting bridge 35 defines a convenient anchor point for first and second pneumatic valve assemblies 38, 39 each of which incorporates an operating lever having, at its end a roller riding on the surface of a cam member 41 carried at the upper end 42 of the push-rod 27.

The cam member 41 is in the form of a sleeve having a region of increased diameter adjacent its axial mid-point and regions of lesser diameter at its opposite axial ends respectively. Thus the central region of the cam member 41 defines a high point of the cam and the opposite axial ends define low points. When the diaphragm 22 is in a central, rest position the cam member 41 will have its high point disposed between the rollers of the operating levers of the valve assemblies 38, 39 and thus each valve assembly roller will be in engaged with a low point of the cam. The valve assemblies are so arranged as to be closed while their operating lever rollers are engaged with low points of the cam 41. Movement of the high point of the cam into engagement with one or other of the rollers will open the respective valve assembly.

The valve assembly 38 has an inlet connected to a source of air under pressure, and an outlet communicating with the sub-chamber 25. Thus engagement of the high point of the cam 41 with the roller of the valve assembly 38 will open the valve assembly 38 to permit air under pressure to flow into the sub-chamber 25 through an inlet union 38a on the plate 16. The valve assembly 39 has an inlet communicating with the sub-chamber 25a through a passage 39a in the plate 16, and an outlet communicating with atmosphere. Thus when the cam 41 is moved to engage its high point with the roller of the valve assembly 39 the valve assembly 39 is opened to vent the sub-chamber 25a to atmosphere.

A protective dome 43, conveniently moulded in a robust synthetic resin material, overlies the housing component 14 and the lifting bridge 35, the dome cooperating at its open end with the plate 15. The wall of the housing component 11 is formed with a screw-threaded union 44 whereby, in use, the sub-chamber 24 is coupled to a liquid paint supply line, between a paint delivery pump, and a demand system in the form, for example, of one or more spray guns or spray heads. A pressure operated safety valve 45 mounted on the plate 16 communicates with the sub-chamber 25 and is opened by the pressure in the sub-chamber 25 when the pressure exceeds a predetermined safe value, so that in such circumstances the sub-chamber 25 is vented to atmosphere.

Assuming that the union 44 is coupled to the paint supply line, and the inlet of the valve assembly 38 is coupled to a supply of air under pressure, then the operation of the surge suppressor is as follows:-

Initially, before delivery of paint from the delivery pump occurs the diaphragm 22 will be flexed towards the wall of the housing component 11 by the spring 34 acting on the diaphragm 22 through the piston 33. The valve assembly 39 will thus be in an open position venting the sub-chamber 25 to atmosphere. As delivery of paint from the pump into the supply line commences paint will flow into the sub-chamber 24 flexing the diaphragm 22 back towards its central, rest position. Such movement of the diaphragm 22 will be followed by the piston 33 and push-rod 27 thus moving the cam 41 relative to the valve assemblies 37, 39. The high point of the cam 41 will be moved away from the roller of the valve 39 thus closing the valve assembly 39 and thus closing the vent to atmosphere of the sub-chamber 25. However, the air pressure in the sub-chamber 25 will be little more than atmospheric pressure and thus the sub-chamber 24 will continue to fill with paint displacing the diaphragm 22 beyond its central, rest position. As the diaphragm passes the central, rest position the high point of the cam 41 will operate the valve assembly 38 to open the valve assembly 38 so permitting a flow of air under pressure into the sub-chamber 25, opposing the movement of the diaphragm 22. Thus the diaphragm 22 will assume a position close to its central rest position.

The surge suppressor will accommodate both upward and downward momentary changes of pressure in the supply line, but is primarily intended to smooth out periodic, momentary loses of pressure arising from the change in direction of the piston of the paint delivery pump. At the end of each stroke of the piston of the delivery pump the piston must change direction, and at this point the pressure in the supply line drops momentarily. As such a pressure drop occurs the pressure in the sub-chamber 25 will momentarily exceed the pressure in the sub-chamber 24 and the diaphragm 22 will be driven by the excess pressure to expel paint from the sub-chamber 24 and into the supply line. Thus although the pressure at the pump outlet may be seen to drop momentarily the pressure in the supply line at least between the surge suppressor and the demand will be maintained by the action of the surge suppressor. As the pressure at the pump outlet is again restored the pressure in the sub-chamber 24 will rise restoring the diaphragm 22 to its central rest position.

The design of the surge suppressor is such that during momentary loss of pressure owing to the normal operation of the pump the diaphragm 22 will not be moved sufficiently far for the valve assembly 39 to be opened. Thus in the normal operation of the surge suppressor the valve assemblies 38, 39 will not operate. However, should the pressure in the supply line be maintained at a lower level for a significant period then a point may be reached at which the valve assembly 39 is opened venting the sub-chamber 25 to atmosphere so that a new pressure equilibrium between the sub-chambers 24 and 25 is achieved. Similarly, should the pressure in the paint supply line be maintained above the intended operating pressure for a sustained period, or if leakage from the sub-chamber 25 should occur, then the diaphragm 22 may reach a point at which the valve assembly 38 is actuated to supply air under pressure to the sub-chamber 25 either to establish a new equilibrium position, or alteratively to restore the original equilibrium position.

It is anticipated that electronic monitoring will be incorporated to provide a warning of the diaphragm reaching either of upper and iower predetermined limit positions. Such electronic monitoring could be provided by optical or proximity switching sensors associated with the cam 41 or push-rod 27 and could serve to trigger an audible and/or visible warning to an operator that an over or under pressure fault condition has arisen.

There may be operating environments where the compressed air supply is of an insufficient pressure in relation to the operating pressure of the paint supply line. In such circumstances a known pressure intensifier may be interposed between the compressed air supply and the valve assembly 38 to increase the air pressure supplied through the valve 38 to the sub-chamber 25.

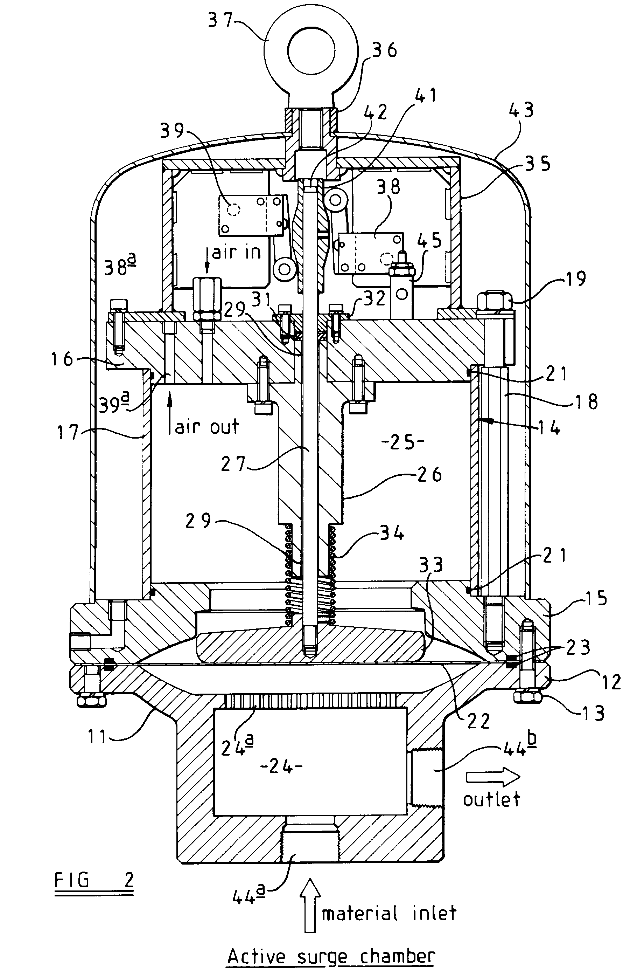

The modification illustrated in Figure 2 differs from the Figure 1 construction in the nature and construction of the housing part 11. In the Figure 2 embodiment the housing part 11 is enlarged to provide an enlarged sub-chamber 24, although the housing part 11 cooperates with the housing part 14 in exactly the manner described above in relation to the Figure 1 embodiment and the volume of the sub-chamber 25 is still significantly greater than that of the sub-chamber 24, being at least double that of the sub-chamber 24.

The wall of the housing part 11 has inlet and outlet unions 44a, 44b such that during normal operation the paint supply line from the pump to the demand includes the sub-chamber 24 since paint from the pump will flow into the sub-chamber 24 through the inlet union 44a, and out of the sub-chamber 24 to the demand through the outlet union 44b. It will be recognised that this is distinct from the arrangement illustrated in Figure 1 where the union 44 is connected through a branch pipe to a T-connector in the supply line between the pump and the demand.

In addition to being of increased size by comparison with that of Figure 1, the sub-chamber 24 of the other Figure 2 embodiment is sub-divided by a perforated wall 24a to form a first region bounded at one side by the diaphragm 22, and a second region communicating with the inlet and outlet unions 44a, 44b. The provision of a perforated wall 24a providing communication between the two regions of the sub-chamber 24, together with the second region of the sub-chamber 24 forming part of the supply line between pump and demand, produces a further smoothing action in relation to pressure fluctuations in the supply line adjacent the demand. The exact mechanism for this is not understood, but it is believed that the size, the number, and the relative positioning of the apertures in the perforated wall 24a have a bearing on the smoothing action. The perforated wall 24a can also support the diaphragm 22 when defining a limit position of the movement of the diaphragm 22 in one direction. In one embodiment the perforations of the wall 24a are circular drillings each of 3.2 mm diameter, there being 24 drillings in total and the drillings being equally spaced over the area of a circle of 9.1 cm diameter centred on the axis of the push-rod 27.

In order that the surge suppressor illustrated in Figure 2 may be removed from the paint supply line for servicing manually operable valves are incorporated in the supply line adjacent the inlet and outlet unions 44a, 44b and a permanently connected bypass pipe links the two parts of the supply line upstream of the valve adjacent the inlet union and downstream of the valve adjacent the outlet union respectively.

## Claims

1. A surge suppressor comprising a housing (11, 15, 16, 17) divided internally by a flexible diaphragm (22) to define first and second sub-chambers (24, 25), coupling means (44) for connecting the first sub-chamber, in use, with an hydraulic line and characterized by the volume of the first sub-chamber (25), with the diaphragm (22) in a central rest position, being significantly smaller than the volume of the second sub-chamber (25), first valve means (38) operable, in use, to couple the second sub-chamber (25) to a source of gas under pressure, second valve means operable, in use, to vent the second sub-chamber (25) to atmosphere, and means (27, 33, 41) response to the position of said diaphragm (22) for operating said first and second valve means (38, 39) in relation thereto.

2. A surge suppressor as claimed in Claim 1, characterized in that said means responsive to the position of said diaphragm (22) comprises a mechanical diaphragm follower (33, 27, 41) which moves with the diaphragm (22), and which, when the volume of the first sub-chamber (24) exceeds a predetermined value, operates said first valve means (38) to permit introduction of air under pressure into the second sub-chamber (25), and which, when the volume of said first sub-chamber (24) falls below a second predetermined value, operates said second valve means (39) to vent said second sub-chamber (25) to atmosphere.

3. A surge suppressor as claimed in Claim 1 or Claim 2, characterized in that said valves (38, 39) are operable by a linearly movable cam member (41) forming part of said means responsive to the position of the diaphragm (22).

4. A surge suppressor as claimed in any one of Claims 1 to 3, characterized in that said coupling means (44) is both inlet and outlet in relation to liquid flow between said sub-chamber (24) and said hydraulic line.

5. A surge suppressor as claimed in any one of Claims 1 to 3, characterized in that said coupling means (44) includes an inlet union (44a) through which liquid flows in use from said hydraulic line into said sub-chamber (24) and a separate outlet union (44b) through which liquid returns to said hydraulic line from the sub-chamber (24).

6. A surge suppressor as claimed in Claim 5, characterized in that said sub-chamber (24) is subdivided by a perforated wall (24a) to define a first region presented to the diaphragm (22) and a second region having said inlet and outlet unions (44a, 44b).
